# EUROPEAN PATENT APPLICATION

(11) **EP 4 768 167 A2**
(43) Date of publication of application: **01.07.2026**
(21) Application number: 25227355.2
(22) Date of filing: 29.12.2025
(51) Int. Cl.: B23K 26/00, B23K 26/06, B23K 26/064, B23K 26/073, B23K 26/082, B23K 26/24, B23K 26/21, B23K 26/70

(54) **MULTIFOCAL POINT-RING SPOT GENERATION SYSTEM AND LASER WELDING METHOD**

(30) Priority: 05.11.2025 CN 202511608628
(71) Applicant: Wuhan Xinghong Optoelectronic Technology Co., Ltd., Wuhan, Hubei 430200 (CN)
(72) Inventor: LI, Gaowen, Wuhan, 430200 (CN); HUANG, Xuejiao, Wuhan, 430200 (CN)
(74) Representative: Chung, Hoi Kan

(57) **Abstract**

Disclosed are a multifocal point-ring spot generation system and a laser welding method in the technical field of laser processing. The system includes an annular light source, a first collimating lens, an annular beam generation module, and a first reflector arranged sequentially at intervals along a first straight-line direction, and a point light source, a second collimating lens, a first focusing lens, a multi-curvature hollow reflector, and a second focusing lens arranged sequentially at intervals along a second straight-line direction, where the multi-curvature hollow reflector and the second focusing lens are each provided with a through hole at their centers for allowing a beam emitted by the point light source to pass therethrough, and the multi-curvature hollow reflector has an adjustable mirror surface curvature. The system can solve the technical problems of high processing cost and poor stability in deep welding caused by structural constraints of point-ring lasers in the prior art.

## Description

### TECHNICAL FIELD

The present invention relates to the technical field of laser processing and, in particular, to a multifocal point-ring spot generation system and a laser welding method.

### BACKGROUND

With the development of laser welding, the laser welding market has become highly competitive, and the manufacturing industry's requirements for welding technology are increasingly stringent. Conventional welding methods (such as arc welding and ultrasonic welding) have certain limitations, including issues such as excessively high temperature during the welding process, significant deformation, and unstable weld quality; in laser welding, especially during high-power welding processes, spatter is most likely to occur. The particulate matter generated by spatter can adhere to the molten pool and the surface of the workpiece, easily causing changes in surface roughness, scratching the base material, contaminating the internal clean environment of the welding head, and affecting the service life of optical lenses.

In related technologies, point-ring lasers can effectively address the aforementioned problems. Such lasers simultaneously emit two beams of laser light, one as a center and the other as a peripheral ring, and through a complex optical path system, form a focused spot consisting of a central point-shaped spot and a peripheral ring-shaped spot. During welding, while the central point-shaped spot forms the molten pool, the peripheral ring laser rapidly heats and melts the edge, thereby avoiding spatter.

However, existing point-ring lasers, such as the AMB product from IPG in the United States and the ABP series from Raycus, feature highly complex and expensive external optical path point-ring spot laser head systems, resulting in high laser welding processing costs. Moreover, the structures of their point-ring spot laser heads are constrained by model specifications, and the focused peripheral ring-shaped spot and point-shaped spot are both focused on the same focal plane, with a fixed spot pattern. During the process of performing laser welding on relatively thick workpieces across multiple penetration depths, as the point-shaped spot penetrates to different depths, the peripheral ring-shaped spot may experience reduced heat-affected range due to energy attenuation or insufficient penetration depth, consequently leading to inconsistent weld bead widths at different thicknesses of the workpiece and poor stability in deep-layer welding.

### SUMMARY

Embodiments of the present invention provide a multifocal point-ring spot generation system and a laser welding method, which can solve the technical problems of high processing cost and poor stability in deep-layer welding caused by structural constraints of point-ring lasers in the prior art. The technical solutions are as follows:
in a first aspect, an embodiment of the present invention provides a multifocal point-ring spot generation system, including:
a first optical path assembly, comprising an annular light source, a first collimating lens, an annular beam generation module, and a first reflector arranged sequentially at intervals along a first straight-line direction; and
a second optical path assembly, comprising a point light source, a second collimating lens, a first focusing lens, a multi-curvature hollow reflector, and a second focusing lens arranged sequentially at intervals along a second straight-line direction, wherein the multi-curvature hollow reflector and the second focusing lens are each provided with a through hole at their centers for allowing a beam emitted by the point light source to pass therethrough, and the multi-curvature hollow reflector has an adjustable mirror surface curvature;
wherein a beam emitted by the annular light source is arranged to be sequentially reflected by the first reflector and the multi-curvature hollow reflector after passing through the first collimating lens and the annular beam generation module, and is then focused by the second focusing lens to form a ring-shaped spot; and
wherein the beam emitted by the point light source is arranged to pass through the second collimating lens, the first focusing lens, the through holes at centers of the multi-curvature hollow reflector and the second focusing lens, and is then focused to form a point-shaped spot located inside the ring-shaped spot.

Optionally, a plurality of first optical path assemblies are provided; a plurality of multi-curvature hollow reflectors are provided in the second optical path assembly, and the plurality of multi-curvature hollow reflectors correspond one-to-one with the plurality of first optical path assemblies; and the plurality of multi-curvature hollow reflectors are arranged at intervals along the second straight-line direction.

Optionally, at least one of the plurality of first optical path assemblies is provided with a dynamic variation module; the dynamic variation module is located between the first reflector and the multi-curvature hollow reflector corresponding to the first optical path assembly; and the dynamic variation module comprises two wedge prisms which are coaxially arranged along a direction of the beam emitted by the annular light source and are capable of axial rotation, refractive surfaces of the two wedge prisms are arranged facing each other.

Optionally, the plurality of first optical path assemblies are arranged at intervals along the first straight-line direction.

Optionally, the annular beam generation module is provided with an axicon lens arranged along the first straight-line direction.

Optionally, the axicon lens comprises a negative axicon lens and a positive axicon lens coaxially arranged at intervals along the direction of the beam emitted by the annular light source, and conical surfaces of the negative axicon lens and the positive axicon lens are arranged facing each other.

Optionally, a dual-axis galvanometer scanner is arranged between the second collimating lens and the first focusing lens.

Optionally, the first collimating lens and the second collimating lens have adjustable degrees of collimation.

In a second aspect, an embodiment of the present invention provides a laser welding method, implemented based on the multifocal point-ring spot generation system described in the first aspect, including:
emitting a beam by an annular light source, reflecting the beam sequentially by a first reflector and a multi-curvature hollow reflector after the beam passes through a first collimating lens and an annular beam generation module, and focusing the beam by a second focusing lens on a surface of a workpiece to form a ring-shaped spot;
emitting a beam by a point light source, and focusing the beam on the surface of the workpiece to form a point-shaped spot located inside the ring-shaped spot after the beam passes through a second collimating lens, a first focusing lens, and through holes at the centers of the multi-curvature hollow reflector and the second focusing lens; and
adjusting a mirror surface curvature of the multi-curvature hollow reflector to form the ring-shaped spot outside a focal plane of the point-shaped spot while also forming a ring-shaped spot on a focal plane different from the focal plane of the point-shaped spot.

Optionally, the laser welding method further includes: providing a plurality of first optical path assemblies, and providing a plurality of multi-curvature hollow reflectors in the second optical path assembly, the plurality of multi-curvature hollow reflectors correspond one-to-one with the plurality of first optical path assemblies; and
adjusting focal planes of ring-shaped spots formed by focusing the plurality of first optical path assemblies on the workpiece, to form a plurality of ring-shaped spots outside the point-shaped spot, or to form a plurality of ring-shaped spots on focal planes different from that of the point-shaped spot.

The beneficial effects brought by the technical solutions provided in the embodiments of the present invention at least include the following:
by using the multifocal point-ring spot generation system provided in the embodiments of the present invention, during the laser welding process, through the coordinated operation of the first optical path assembly and the second optical path assembly, the focal plane of the ring-shaped spot formed by focusing is positionally regulated along the optical path, achieving multifocal relay with the point-shaped spot and performing welding on different focal planes. This simultaneously ensures the heating and melting of the molten pool boundary on the focal plane of the point-shaped spot, thereby suppressing spatter. When a to-be-welded workpiece with varying thickness is processed, the weld bead width is controlled to remain consistent at different penetration depths. The entire optical path structure is simple in construction, effectively solving the technical problems of high processing cost and poor stability in deep welding caused by structural constraints of point-ring lasers in the prior art.

### BRIEF DESCRIPTION OF THE DRAWINGS

To describe the technical solutions in the embodiments of the present invention more clearly, the following will briefly introduce the accompanying drawings required for describing the embodiments. Apparently, the accompanying drawings in the following description show merely some embodiments of the present invention, and a person of ordinary skill in the art may still derive other drawings from these accompanying drawings without making creative efforts.
FIG. 1 is a schematic structural diagram of a multifocal point-ring spot generation system according to an embodiment of the present invention;
FIG. 2 is a schematic structural diagram of another multifocal point-ring spot generation system according to an embodiment of the present invention;
FIG. 3 is a schematic structural diagram of a dynamic variation module according to an embodiment of the present invention;
FIG. 4 is a schematic optical path diagram of a dual-axis galvanometer scanner inside a module according to an embodiment of the present invention;
FIG. 5 is a flowchart of a laser welding method according to an embodiment of the present invention; and
FIG. 6 is a schematic diagram of workpiece processing according to an embodiment of the present invention.

### In the figures:

1 - first optical path assembly; 2 - second optical path assembly; 3 - dynamic variation module; 4 - dual-axis galvanometer scanner; 5 - strip-shaped workpiece; 11 - annular light source; 12 - first collimating lens; 13 - annular beam generation module; 14 - first reflector; 21 - point light source; 22 - second collimating lens; 23 - first focusing lens; 24 - multi-curvature hollow reflector; 25 - second focusing lens; 31 - wedge prism; 51 - first section; 52 - transition section; 53 - second section; 131 - axicon lens; 131a - negative axicon lens; and 131b - positive axicon lens.

### DETAILED DESCRIPTION OF THE EMBODIMENTS

To make the objectives, technical solutions, and advantages of the present invention clearer, the embodiments of the present invention will be further described in detail below with reference to the accompanying drawings.

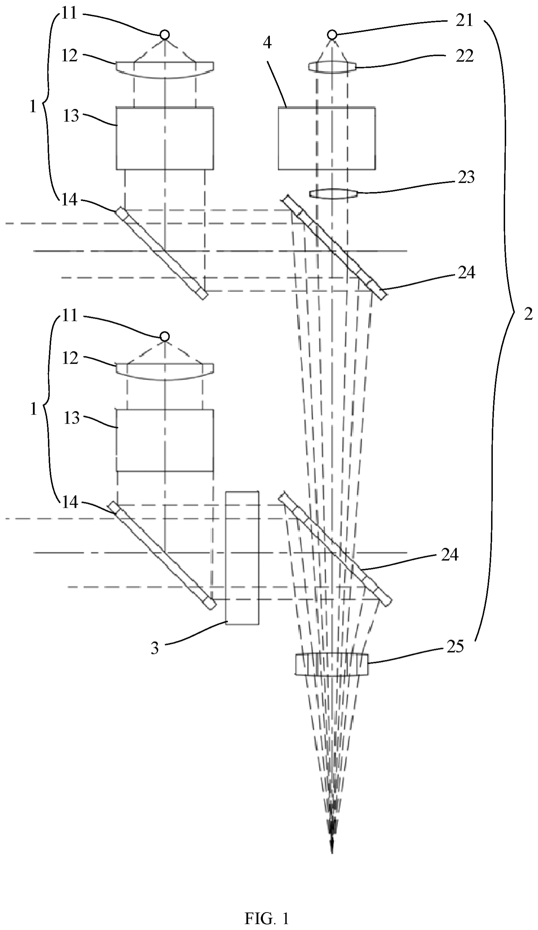

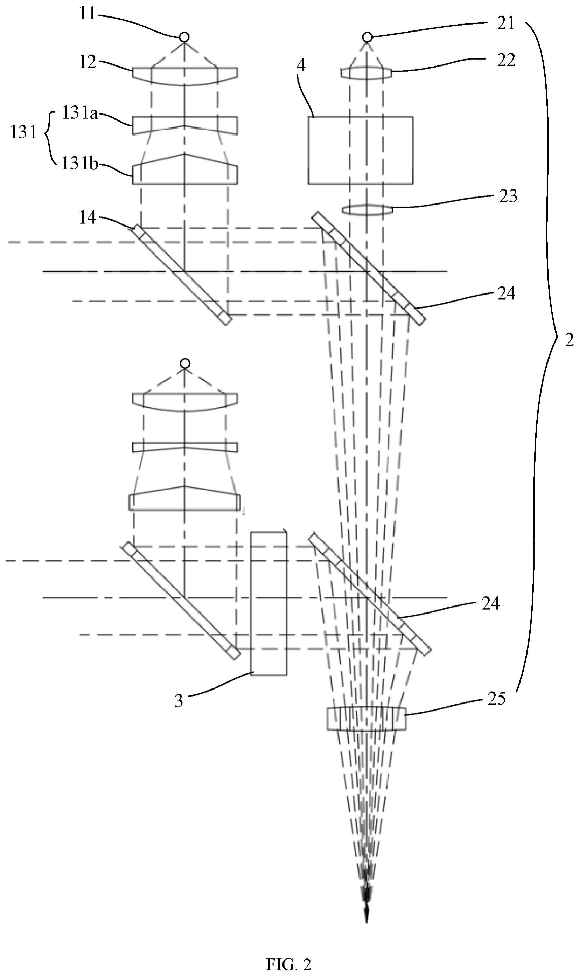

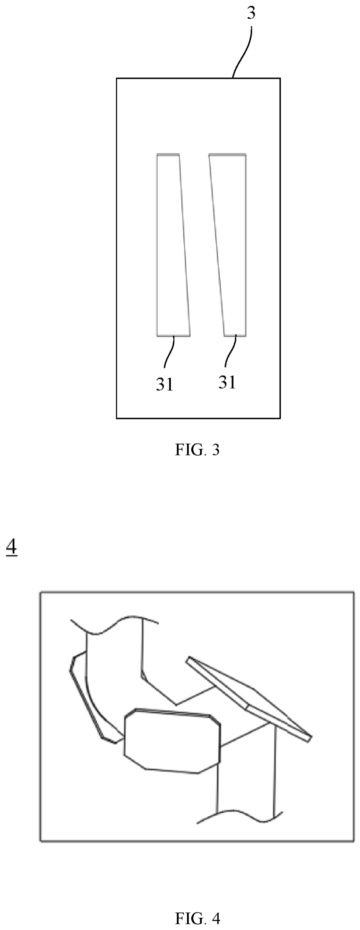

FIG. 1 is a schematic structural diagram of a multifocal point-ring spot generation system according to an embodiment of the present invention; FIG. 2 is a schematic structural diagram of another multifocal point-ring spot generation system according to an embodiment of the present invention; FIG. 3 is a schematic structural diagram of a dynamic variation module according to an embodiment of the present invention; and FIG. 4 is a schematic optical path diagram of a dual-axis galvanometer scanner inside a module according to an embodiment of the present invention. As shown in FIGS. 1-4, an embodiment of the present invention provides a multifocal point-ring spot generation system, including: a first optical path assembly 1 and a second optical path assembly 2.

The first optical path assembly 1 includes an annular light source 11, a first collimating lens 12, an annular beam generation module 13, and a first reflector 14 arranged sequentially at intervals along a first straight-line direction.

The second optical path assembly 2 includes a point light source 21, a second collimating lens 22, a first focusing lens 23, a multi-curvature hollow reflector 24, and a second focusing lens 25 arranged sequentially at intervals along a second straight-line direction. The multi-curvature hollow reflector 24 and the second focusing lens 25 are each provided with a through hole at their centers for allowing a beam emitted by the point light source 21 to pass therethrough, and the multi-curvature hollow reflector 24 has an adjustable mirror surface curvature.

A beam emitted by the annular light source 11 is sequentially reflected by the first reflector 14 and the multi-curvature hollow reflector 24 after passing through the first collimating lens 12 and the annular beam generation module 13, and is then focused by the second focusing lens 25 to form a ring-shaped spot. The beam emitted by the point light source 21 passes through the second collimating lens 22, the first focusing lens 23, the through holes at the centers of the multi-curvature hollow reflector 24 and the second focusing lens 25, and is then focused to form a point-shaped spot located inside the ring-shaped spot.

In the embodiments of the present invention, during laser welding of a workpiece, the first optical path assembly 1 operates in coordination with the second optical path assembly 2. The beam emitted by the point light source 21 becomes collimated after passing through the second collimating lens 22, is then focused by the first focusing lens 23, and sequentially passes through the through holes at the centers of the multi-curvature hollow reflector 24 and the second focusing lens 25 before being focused on the surface of the workpiece to form a point-shaped spot. Simultaneously, the beam emitted by the annular light source 11 becomes collimated after passing through the first collimating lens 12, and then forms a ring-shaped beam after passing through the annular beam generation module 13. Specifically, the annular beam generation module 13 may employ a fiber-optic circulator, diffractive optical element (DOE), or axicon lens form. The fiber-optic circulator converts a fundamental mode into an annular mode using fiber gratings or tapered couplers, but its ring diameter is fixed by fiber parameters and cannot be dynamically adjusted. A Gaussian beam can generate an annular light field through diffraction by a DOE phase plate, and its ring diameter can be dynamically adjusted, but real-time tuning requires a high-cost spatial light modulator. The collimated beam can generate a Bessel beam through an axicon lens to form an annular beam having a continuously adjustable ring diameter, with a long non-diffracting distance, while also offering ultra-high power compatibility. Considering both cost and ease of setup, the embodiments of the present invention employ the collimated beam cooperating with an axicon lens 131 arranged inside the annular beam generation module 13 to generate the annular beam. Thereafter, the beam is sequentially reflected by the first reflector 14 and the peripheral lens portion around the through hole of the multi-curvature hollow reflector 24, and finally focused by the peripheral lens portion around the through hole of the second focusing lens 25, forming a ring-shaped spot around the periphery of the point-shaped spot on the workpiece. During welding, while the central point-shaped spot forms the molten pool, the peripheral ring-shaped spot rapidly heats and melts the edge, thereby preventing spatter.

Furthermore, by dynamically adjusting the mirror surface curvature of the multi-curvature hollow reflector 24, electrical, magnetic, pneumatic, or other driving signals are converted into precise micro-displacements of the mirror surface, thereby modulating the phase of the reflected or transmitted light wave and achieving axial focusing of the ring-shaped spot through globally uniform pressure application. An increase in curvature enhances beam divergence, causing the focal point after the second focusing lens 25 to move closer to the second focusing lens 25, and a decrease in curvature enhances beam convergence, causing the focal point after the focusing lens to move away from the second focusing lens 25. In the case where the ring-shaped spot and the point-shaped spot are located on the same focal plane, by adjusting the mirror surface curvature of the multi-curvature hollow reflector 24 to decrease, the focal plane of the ring-shaped spot is shifted downward, forming a pre-melting zone of the ring-shaped spot at a deeper position in the weld of the workpiece, thereby increasing the heat-affected range. Meanwhile, on the focal plane where the point-shaped spot is located, the annular beam can still heat and melt the molten pool boundary formed by the point-shaped spot from the periphery, preventing spatter and oxidation.

By using the multifocal point-ring spot generation system provided in the embodiments of the present invention, during the laser welding process, through the coordinated operation of the first optical path assembly 1 and the second optical path assembly 2, the focal plane of the ring-shaped spot formed by focusing is positionally regulated along the optical path, achieving multifocal relay with the point-shaped spot and performing welding on different focal planes. This simultaneously ensures the heating and melting of the molten pool boundary on the focal plane of the point-shaped spot, thereby suppressing spatter. When a to-be-welded workpiece with varying thickness is processed, the weld bead width is controlled to remain consistent at different penetration depths. The entire optical path structure is simple in construction, effectively solving the technical problems of high processing cost and poor stability in deep welding caused by structural constraints of point-ring lasers in the prior art.

Optionally, the first optical path assembly 1 is provided in a plurality; the multi-curvature hollow reflector 24 in the second optical path assembly 2 is provided in a plurality, each in a one-to-one correspondence with the plurality of first optical path assemblies 1; and the plurality of multi-curvature hollow reflectors 24 are arranged at intervals along the second straight-line direction. For example, in an embodiment of the present invention, two first optical path assemblies 1 are provided and arranged at intervals along the first straight-line direction, i.e., the beam emission direction of the annular light source 11. Both are disposed beside the second optical path assembly 2 where the point light source 21 is located. By arranging them on the same side, it facilitates the co-directional arrangement of the multi-curvature hollow reflectors 24 in the second optical path assembly 2 along the optical path of the point light source 21, and also maximizes the utilization of the extended length of the second optical path assembly 2 along the optical path, reducing the overall space occupied by the system. The annular beams reflected by the first reflectors 14 in two second optical path assemblies 2 can be reflected by the multi-curvature hollow reflectors 24 disposed on the same side and correspondingly arranged, to be focused by the second focusing lens 25 to form ring-shaped spots. By providing two sets of first optical path assemblies 1, two independent ring-shaped spots can be formed on the surface of a to-be-welded workpiece, and/or a plurality of ring-shaped spots can be formed on focal planes different from the focal plane of the point spot. Depending on the actual workpiece processing specifications, the two first optical path assemblies 1 can also operate separately or simultaneously. For example, when both of the first optical path assemblies 1 operate simultaneously, two ring-shaped spots with different diameters can be formed outside the point-shaped spot. For example, the inner ring-shaped spot located around the periphery of the point-shaped spot may have a diameter 2 to 3 times that of the point-shaped spot, used to form the molten pool boundary, while the outer ring-shaped spot located outside the inner ring-shaped spot may have a diameter 1.5 to 2 times that of the inner ring-shaped spot, used to suppress spatter and oxidation. In another feasible implementation manner, by adaptively adjusting the mirror surface curvature of the multi-curvature hollow reflectors 24 in the second optical path assembly 2, the focal planes of the two ring-shaped spots are separately adjusted, forming a combination of the point-shaped spot and the multifocal ring-shaped spots, achieving concentric coupling of composite multifocal beams. This enables simultaneous welding on different focal planes, further improving the controllability over weld bead width. For example, the point-shaped spot may be focused on or slightly below the surface of the workpiece during operation. The focal plane of the inner ring-shaped spot located around the periphery of the point-shaped spot may be slightly deeper than the focal plane where the point-shaped spot is located, to form a preheating zone below. The focal plane of the outer ring-shaped spot outside the inner ring-shaped spot is further deeper than that of the inner ring-shaped spot, serving as a pre-melting zone or heat-affected zone for control.

Optionally, at least one of the plurality of first optical path assemblies 1 is provided with a dynamic variation module 3. The dynamic variation module 3 is located between the first reflector 14 and the multi-curvature hollow reflector 24 corresponding to the first optical path assembly 1. The dynamic variation module 3 includes two wedge prisms 31 coaxially arranged along a direction of the beam emitted by the annular light source 11 and capable of axial rotation, with refractive surfaces of the two wedge prisms 31 facing each other. For example, in an embodiment of the present invention, by adding the dynamic variation module 3 to the first optical path assembly 1, two wedge prisms are provided, and corresponding motors and rotors are set to drive the two wedge prisms 31 for rotational control. When the two wedge prisms 31 rotate in the same direction at the same speed, their refractive vectors combine to form a fixed deflection angle, causing the spot focused by the annular beam to perform circular motion on the focal plane. By controlling the initial phase angle difference between the two wedge prisms through relative rotation, the center position of the circular motion can be locked, achieving translation of the circle center, and enabling spot movement after focusing. During the rotational adjustment process, by changing the rotational speed ratio or relative angle between the two wedge prisms 31, the magnitude of the resultant refractive angle can be adjusted, thereby achieving dynamic scaling adjustment of the radius of the ring-shaped spot. This optimizes the defect that the point-shaped spot and ring-shaped spot generated by point-ring lasers in the prior art can only oscillate synchronously and are impossible to achieve independent oscillation and spot pattern adjustment.

Optionally, the axicon lens 131 includes a negative axicon lens 131a and a positive axicon lens 131b coaxially arranged at intervals along the direction of the beam emitted by the annular light source 11, with conical surfaces of the negative axicon lens 131a and the positive axicon lens 131b facing each other. For example, referring to FIG. 2, in an embodiment of the present invention, an annular beam generation module 13 can also be integrally formed by combining a negative axicon lens 131a and a positive axicon lens 131b. When a collimated beam passes through the annular beam generation module 13, the beam first passes through the negative axicon lens 131a to form a diverging ring-shaped spot, and then passes through the positive axicon lens 131b to integrate a diverging ring-shaped beam into the collimated beam, thereby achieving adjustment and control of the ring width and diameter of the annular beam. This cooperates with the reflection of the multi-curvature hollow reflector 24 and the focusing of the second focusing lens 25 to form a ring-shaped spot of the required size. By changing the apex angles, spacing, and size of the transmitted beam of the negative axicon lens 131a and the positive axicon lens 131b, the final size of the ring-shaped spot can be further adjusted, improving processing adaptability.

Optionally, a dual-axis galvanometer scanner 4 is arranged between the second collimating lens 22 and the first focusing lens 23. For example, in the second optical path assembly, by disposing the dual-axis galvanometer scanner 4 between the second collimating lens 22 and the first focusing lens 23, arbitrary deflection of the beam in a two-dimensional plane is achieved through the coordinated oscillation of two high-speed galvanometers. The deflection angle and direction of the beam are controlled via mechanical vibration, enabling precise regulation of the laser beam emitted by the point light source 21 and achieving dynamic movement control of the focus of the point-shaped spot.

Optionally, the first collimating lens 12 and the second collimating lens 22 have adjustable degrees of collimation. For example, in an embodiment of the present invention, for adjusting the beam size of the annular light source 11 and the point light source 21, the first collimating lens 12 and the second collimating lens 22 may be selected for collimation with the same focal length or with different focal lengths, while their power may also be selected and matched according to process requirements. This adjustment can be achieved by modularizing the corresponding positions of the first optical path assembly 1 and the second optical path assembly 2 to enable external disassembly and replacement operations, thereby precisely regulating the finally formed spot focus and various parameters, further enhancing the flexibility and adaptability of the system.

For example, in an embodiment of the present invention, the multi-curvature hollow reflector 24 is a fully water-cooled metal mirror. Its mirror body contains multiple internal water channels, enabling cooling water circulation to maintain the overall temperature of the mirror surface during processing and allowing it to reflect higher-power beams.

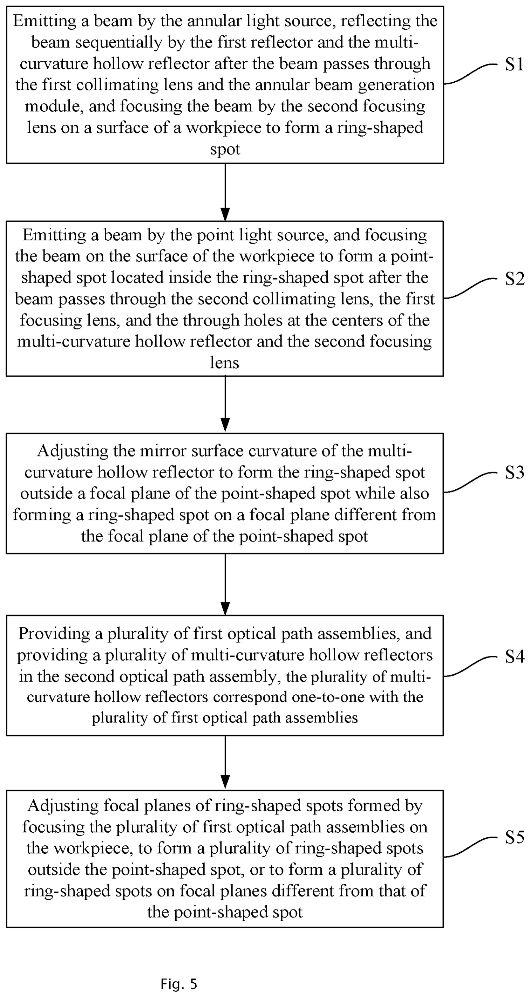

FIG. 5 is a flowchart of a laser welding method according to an embodiment of the present invention. As shown in FIG. 5, the embodiment of the present invention further provides a laser welding method, implemented based on the multifocal point-ring spot generation system shown in FIGS. 1-4, including the following steps:

S1: emitting a beam by the annular light source 11, reflecting the beam sequentially by the first reflector 14 and the multi-curvature hollow reflector 24 after the beam passes through the first collimating lens 12 and the annular beam generation module 13, and focusing the beam by the second focusing lens 25 on a surface of a workpiece to form a ring-shaped spot.

S2: emitting a beam by the point light source 21, and focusing the beam on the surface of the workpiece to form a point-shaped spot located inside the ring-shaped spot after the beam passes through the second collimating lens 22, the first focusing lens 23, and the through holes at the centers of the multi-curvature hollow reflector 24 and the second focusing lens 25.

S3: adjusting the mirror surface curvature of the multi-curvature hollow reflector 24 to form the ring-shaped spot outside a focal plane of the point-shaped spot while also forming a ring-shaped spot on a focal plane different from the focal plane of the point-shaped spot.

By using the multifocal point-ring spot generation system provided in the embodiments of the present invention and performing the aforementioned laser welding method, during the laser welding process, through the coordinated operation of the first optical path assembly 1 and the second optical path assembly 2, the focal plane of the ring-shaped spot formed by focusing is positionally regulated along the optical path, achieving multifocal relay with the point-shaped spot and performing welding on different focal planes. This simultaneously ensures the heating and melting of the molten pool boundary on the focal plane of the point-shaped spot, thereby suppressing spatter. When a to-be-welded workpiece with varying thickness is processed, the weld bead width is controlled to remain consistent at different penetration depths. The entire optical path structure is simple in construction, effectively solving the technical problems of high processing cost and poor stability in deep welding caused by structural constraints of point-ring lasers in the prior art.

S4: arranging the first optical path assembly 1 in a plurality of sets, and arranging the multi-curvature hollow reflector 24 in a plurality in the second optical path assembly 2, each in a one-to-one correspondence with the plurality of first optical path assemblies 1.

S5: adjusting focal planes of ring-shaped spots formed by focusing from the plurality of sets of first optical path assemblies 1 on the workpiece, to form a plurality of ring-shaped spots outside the point-shaped spot, or to form a plurality of ring-shaped spots on focal planes different from that of the point-shaped spot.

Further, by arranging the first optical path assembly 1 in a plurality of sets and adaptively adjusting the mirror surface curvature of the multi-curvature hollow reflectors 24 in the second optical path assembly 2, the focal planes of the two ring-shaped spots are separately adjusted, forming a combination of the point-shaped spot and the multifocal ring-shaped spots, achieving concentric coupling of composite multifocal beams. This enables simultaneous welding on different focal planes, further improving the controllability over weld bead width. For example, the point-shaped spot may be focused on or slightly below the surface of the workpiece during operation. The focal plane of the inner ring-shaped spot located around the periphery of the point-shaped spot may be slightly deeper than the focal plane where the point-shaped spot is located, to form a preheating zone below. The focal plane of the outer ring-shaped spot outside the inner ring-shaped spot is further deeper than that of the inner ring-shaped spot, serving as a pre-melting zone or heat-affected zone for control.

Specifically, based on extensive processing experiments conducted by the applicant, threshold control parameters for the spacing between the focal planes of the ring-shaped spots formed by the two first optical path assemblies 1 and the point-shaped spot have been summarized for to-be-welded workpieces with varying thickness. By referring to the threshold range for setting the spacing between the focal planes of the spots, optimal welding results can be achieved:
referring to the description above, the focal depth is Z₁ for the point-shaped spot, Z₂ for the inner ring-shaped spot, and Z₃ for the outer ring-shaped spot on the processed surface of the workpiece. The axial spacings between the ring-shaped spots and the point-shaped spot, namely ΔZ₁ = |Z₂-Z₁| and ΔZ₂ = |Z₃-Z₁|, satisfy the following threshold rules:
for thin plates with a thickness less than 1 mm: ΔZ₁ ≈ 0.1-0.3 mm (to achieve slight preheating by the inner ring), ΔZ₂ ≈ 0.3-0.5 mm (to achieve auxiliary protection by the outer ring).

For medium-thick plates with a thickness ranging from 1 to 3 mm: ΔZ₁ ≈ 0.3-0.8 mm (to achieve significant preheating by the inner ring), ΔZ₂ ≈ 0.8-1.5 mm (to achieve an expanded heat-affected zone by the outer ring).

For thick plates/highly reflective materials with a thickness greater than 3 mm: ΔZ₁ ≈ 0.5-2 mm (to achieve deep preheating and anti-reflection by the inner ring), ΔZ₂ ≈ 1.5-3 mm (to achieve spatter suppression by the outer ring).

Regarding the influences of materials of to-be-welded workpieces, materials with high thermal conductivity (such as aluminum) require smaller axial spacings between the point-shaped spot and the ring-shaped spots, while materials with low thermal conductivity (such as titanium) can allow appropriately larger spacings.

Further, in a possible implementation manner, the first reflector 14 in the first optical path assembly 1 and the multi-curvature hollow reflector 24 in the second optical path assembly 2 corresponding to the first reflector 14 can be configured to undergo synchronous positional adjustment along the second straight-line direction (i.e., the longitudinal direction) via an external driving mechanism, such as a motor drive, so as to adjust the width of the annular beam reflected onto the peripheral lens surface around the through hole on the incident side of the second focusing lens 25, ultimately enabling real-time adjustment of the focal plane of the ring-shaped spot focused at the position of the workpiece.

Correspondingly, in the second optical path assembly 2, the first focusing lens 23 can also be configured for positional adjustment along the second straight-line direction via a motor drive, thereby achieving real-time adjustment of the focal plane of the point-shaped spot focused at the position of the workpiece.

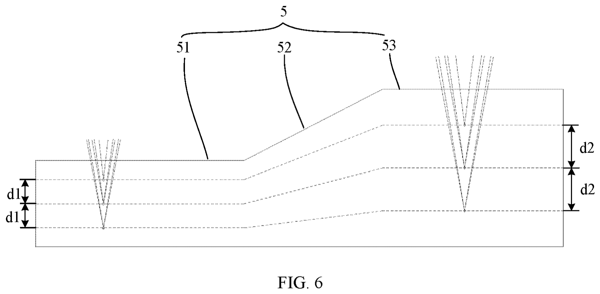

FIG. 6 is a schematic diagram of workpiece processing according to an embodiment of the present invention. Referring to FIG. 6, further, the multifocal point-ring spot generation system is used to weld a workpiece with gradually varying thickness. The first section 51 of the strip-shaped workpiece 5 is relatively thin. After welding a certain distance along the horizontal direction and passing through the transition section 52, the second section 53 is relatively thick. At the start of processing, through two sets of first optical path assemblies 1 and one set of second optical path assembly 2, a point-shaped spot, as well as an inner ring-shaped spot and an outer ring-shaped spot located outside the point-shaped spot, is formed on the workpiece. The focal planes of the inner ring-shaped spot and the outer ring-shaped spot gradually deepen relative to the point-shaped spot, and the spacings between the focal planes of the three are maintained equal, achieving uniform distribution along the thickness direction of the first section 51 (referring to a distance d1 shown in FIG.6). While welding along the horizontal direction and as the spots move into the transition section 52, by controlling the first focusing lens 23 and the two sets of first optical path reflectors 14 and multi-curvature hollow reflectors 24 to rise at a set rate respectively, and stopping the movement upon reaching the second section 53, the focal planes of the point-shaped spot, the inner ring-shaped spot, and the outer ring-shaped spot are still maintained uniformly distributed along the thickness direction during welding of the second section 53 (referring to a distance d2 shown in FIG.6). This enables real-time control of the pre-melting zone or heat-affected zone, ensuring stability in deep-layer welding.

Unless otherwise defined, the technical or scientific terms used herein shall have the common meanings as understood by those skilled in the art to which the present invention belongs. The terms such as "first" or "second" used in the specification and claims of the present application do not indicate any order, quantity, or importance, but are merely used to distinguish different components. Similarly, the terms such as "a" or "an" do not indicate a quantitative limitation, but rather indicate the existence of at least one. The terms such as "including" or "comprising" mean that the elements or items appearing before "including" or "comprising" encompass the elements or items listed after "including" or "comprising" and equivalents thereof, without excluding other elements or items. The terms such as "connection" or "connected" are not limited to a physical or mechanical connection but may include a direct or indirect electrical connection. The terms such as "up", "down", "left", or "right" are only used to indicate relative positional relationships, and when the absolute position of the described object changes, the relative positional relationship may also change accordingly.

The above only describes optional embodiments of the present invention and is not intended to limit the present invention. Any modifications, equivalent substitutions, and improvements made within the spirit and principle of the present invention shall fall within the scope of protection of the present invention.

## Claims

1. A multifocal point-ring spot generation system, comprising:
a first optical path assembly (1), comprising an annular light source (11), a first collimating lens (12), an annular beam generation module (13), and a first reflector (14) arranged sequentially at intervals along a first straight-line direction; and
a second optical path assembly (2), comprising a point light source (21), a second collimating lens (22), a first focusing lens (23), a multi-curvature hollow reflector (24), and a second focusing lens (25) arranged sequentially at intervals along a second straight-line direction, wherein the multi-curvature hollow reflector (24) and the second focusing lens (25) are each provided with a through hole at their centers for allowing a beam emitted by the point light source (21) to pass therethrough, and the multi-curvature hollow reflector (24) has an adjustable mirror surface curvature;
wherein a beam emitted by the annular light source (11) is arranged to be sequentially reflected by the first reflector (14) and the multi-curvature hollow reflector (24) after passing through the first collimating lens (12) and the annular beam generation module (13), and is then focused by the second focusing lens (25) to form a ring-shaped spot; and
wherein the beam emitted by the point light source (21) is arranged to pass through the second collimating lens (22), the first focusing lens (23), the through holes at centers of the multi-curvature hollow reflector (24) and the second focusing lens (25), and is then focused to form a point-shaped spot located inside the ring-shaped spot.

2. The multifocal point-ring spot generation system of claim 1, wherein a plurality of first optical path assemblies (1) are provided; and wherein a plurality of multi-curvature hollow reflectors (24) are provided in the second optical path assembly (2) , and wherein the plurality of multi-curvature hollow reflectors (24) correspond one-to-one with the plurality of first optical path assemblies (1); and wherein the plurality of multi-curvature hollow reflectors (24) are arranged at intervals along the second straight-line direction.

3. The multifocal point-ring spot generation system of claim 2, wherein at least one of the plurality of first optical path assemblies (1) is provided with a dynamic variation module (3); and wherein the dynamic variation module (3) is located between the first reflector (14) and the multi-curvature hollow reflector (24) corresponding to the first optical path assembly (1); and wherein the dynamic variation module (3) comprises two wedge prisms (31) which are coaxially arranged along a direction of the beam emitted by the annular light source (11) and are capable of axial rotation, and wherein refractive surfaces of the two wedge prisms (31) are arranged facing each other.

4. The multifocal point-ring spot generation system of claim 2, wherein the plurality of first optical path assemblies (1) are arranged at intervals along the first straight-line direction.

5. The multifocal point-ring spot generation system of claim 1, wherein the annular beam generation module (13) is provided with an axicon lens (131) arranged along the first straight-line direction.

6. The multifocal point-ring spot generation system of claim 5, wherein the axicon lens (131) comprises a negative axicon lens (131a) and a positive axicon lens (131b) coaxially arranged at intervals along the direction of the beam emitted by the annular light source (11), and wherein conical surfaces of the negative axicon lens (131a) and the positive axicon lens (131b) are arranged facing each other.

7. The multifocal point-ring spot generation system of any one of claims 1-6, wherein a dual-axis galvanometer scanner (4) is arranged between the second collimating lens (22) and the first focusing lens (23).

8. The multifocal point-ring spot generation system of any one of claims 1-6, wherein the first collimating lens (12) and the second collimating lens (22) have adjustable degrees of collimation.

9. A laser welding method, implemented based on the multifocal point-ring spot generation system of any one of claims 1-8, comprising:
emitting a beam by an annular light source (11), reflecting the beam sequentially by a first reflector (14) and a multi-curvature hollow reflector (24) after the beam passes through a first collimating lens (12) and an annular beam generation module (13), and focusing the beam by a second focusing lens (25) on a surface of a workpiece to form a ring-shaped spot;
emitting a beam by a point light source (21), and focusing the beam on the surface of the workpiece to form a point-shaped spot located inside the ring-shaped spot after the beam passes through a second collimating lens (22), a first focusing lens (23), and through holes at the centers of the multi-curvature hollow reflector (24) and the second focusing lens (25); and
adjusting a mirror surface curvature of the multi-curvature hollow reflector (24) to form the ring-shaped spot outside a focal plane of the point-shaped spot while also forming a ring-shaped spot on a focal plane different from the focal plane of the point-shaped spot.

10. The laser welding method of claim 9, comprising:
providing a plurality of first optical path assemblies (1), and providing a plurality of multi-curvature hollow reflectors (24) in the second optical path assembly (2), the plurality of multi-curvature hollow reflectors (24) correspond one-to-one with the plurality of first optical path assemblies (1); and
adjusting focal planes of ring-shaped spots formed by focusing the plurality of first optical path assemblies (1) on the workpiece, to form a plurality of ring-shaped spots outside the point-shaped spot, or to form a plurality of ring-shaped spots on focal planes different from that of the point-shaped spot.
